# EUROPÄISCHE PATENTSCHRIFT

(11) **EP 0 787 080 B1**
(45) Veröffentlichungstag und Bekanntmachung des Hinweises auf die Patenterteilung: **08.07.1998**
(21) Anmeldenummer: 95918612.3
(22) Anmeldetag: 26.04.1995
(51) Int. Cl.: B60R 21/20

(54) **LENKSÄULE**
STEERING COLUMN
COLONNE DE DIRECTION

(30) Priorität: 29.10.1994 DE 4438693
(43) Veröffentlichungstag der Anmeldung: 06.08.1997
(73) Patentinhaber: Heidemann Verwaltungsgesellschaft mbH, 37557 Einbeck (DE)
(72) Erfinder: STAFFLAGE-NUPHAUS, Robert, D-37574 Einbeck (DE); KOHLS, Hermann, D-37574 Einbeck (DE)
(74) Vertreter: Sobisch, Peter, Dipl.-Ing.
(86) Internationale Anmeldenummer: EP9501582
(87) Internationale Veröffentlichungsnummer: WO9613406

(56) Entgegenhaltungen:
- EP-A- 0 499 508
- EP-A- 0 529 769
- EP-A- 0 615 889
- WO-A-93/04904
- DE-A- 2 052 306
- DE-U- 9 407 808
- US-A- 5 342 089

## Beschreibung

Die Erfindung bezieht sich auf eine Lenksäule entsprechend den Merkmalen des Obergriffs des Anspruchs 1.

Funktionselemente der passiven Sicherheit bei Kraftfahrzeugen betreffen neben Gurt-Rückhaltesystemen und Airbag-Systemen die Ausbildung einer möglichst steifen, insbesondere formstabilen Fahrgastzelle sowie die Bereitstellung einer energieabsorbierend wirkenden, plastisch verformbaren Vorderwagenstruktur, die im Falle eines Aufpralls einen Teil der freiwerdenden Energie bindet, wobei eine definierte und insbesondere gleichmäßige Verzögerung der Bewegung der Fahrgastzelle erreicht werden soll. Die letztgenannte Forderung beinhaltet auch die Ausbildung einer Sicherheits-Lenksäule, wobei z.B. eine Verformungsstrecke innerhalb der Lenksäule durch Aufpralldämpfer mechanisch ausgeglichen wird, bevor die Lenksäule in die Fahrgastzelle eindringt. Nach einem anderen System wird das Lenkrad im Falle eines Aufpralls aus dem Aufprallbereich des Fahrers um ein definiertes Maß entfernt, um durch dieses bedingte Verletzungsgefahren zu beseitigen. In Verbindung mit Gurt-Rückhaltesystemen wird häufig ein Airbag-System eingesetzt, welches im wesentlichen aus einem Gasgenerator, einem aufblasbaren Sack und einem Polsterteil besteht. Diese Komponenten befinden sich normalerweise innerhalb des Lenkrades oder auf der Beifahrerseite hinter der dort befindlichen Armaturentafel.

Das Airbag-System wirkt im allgemeinen mit einem, den Aufprall signalisierenden Sensor zusammen, der den Gasgenerator aktiviert und ein Aufblasen des genannten Sackes unter vorheriger Abtrennung des Polsterteils auslöst, wobei dieser Polsterteil über Sollbruchstellen mit der Struktur des Lenkrades in Verbindung steht. Der Sack bildet die Form eines solchen Kissens, welches ein seitliches Abgleiten des Körpers des Fahrers oder auch des Beifahrers verhindern soll. Praktisch besteht das Airbag-System aus einem ersten, Natriumacidtabletten enthaltenden Stahl kanister und einem zweiten Metallbehälter, der den genannten Sack nach Art eines Fallschirmes zusammengefaltet enthält. Über eine durch den Sensor im Fall eines Aufpralles ausgelöste chemische Reaktion entwickelt sich Stickstoff, der zum Aufblasen des Sackes benutzt wird, wobei für den Aufblasvorgang rund 40 msec zur Verfügung stehen.

Aus der US-A-5 342 089 ist eine gattungsgemäße Lenksäule bekannt, bei welcher der Gasgenerator des Airbag-Systems innerhalb einer Lenkspindel untergebracht ist, die ihrerseits drehbar innerhalb eines Lenkungsschutzrohres angeordnet ist. Übrige Komponenten des Airbag-Systems befinden sich innerhalb der Lenkradstruktur. Bei dieser Verteilung der Komponenten des Airbag-Systems läßt sich ein massereiches, eine insbesondere großvolumige, designerische Einschränkungen mit sich bringende Ausbildung des Lenkrades vermeiden.

Das Airbag-System als Element der passiven Sicherheit wird häufig mit einer Sicherheits-Lenksäule zusammen eingesetzt, wobei jedoch nach dem bisherigen Stand der Technik diese beiden Sicherheitselemente, nämlich Airbag-System einerseits und Sicherheits-Lenksäule andererseits getrennt nebeneinander existieren, obwohl beide Elemente Teil eines einheitlichen passiven Sicherheitskonzeptes bilden. Als Elemente einer solchen herkömmlichen Lenksäule sind energieabsorbierend wirkende Ausführungsformen bekannt, bei welchen im Falle eines Frontalaufpralls Teile der Lenksäule eine bleibende Verformung erfahren und auf diese Weise energieabsorbierend wirken.

Es ist die Aufgabe der Erfindung, eine Lenksäule der eingangs bezeichneten Art mit Hinblick auf die Integration von Elementen der passiven Sicherheit weiter auszugestalten. Gelöst ist diese Aufgabe bei einer solchen Lenksäule durch die Merkmale des Kennzeichnungsteil des Anspruchs 1.

Die hohl ausgebildete Lenkspindel dient der Aufnahme des Gasgenerators des Airbag-Systems, so daß eine wesentliche, ein erhebliches Bauvolumen beanspruchende Komponenten des Airbag-Systems aus dem Bereich des Lenkrades entfernt ist. Dies bringt eine deutliche Verringerung des Bauvolumens des Lenkrades mit sich, eröffnet ein hohes Maß an gestalterischer Freiheit bei der Ausbildung des Lenkrades und insbesondere eine symmetrische Masseverteilung, so daß die ansonsten unwuchtbedingten nachteiligen Lenkungseigenschaften vermieden sind. Eine solche Ausbildung einer Lenksäule kann in einfacher Weise mit automatischen Gurtstraffern sowie eventuell Seiten-Airbags benutzt werden und eröffnet einfache Möglichkeiten zur Erhöhung des Fahrsicherheit. Gleichzeitig wird das durch die im Regelfall hohl ausgebildete Lenkspindel umgrenzte Bauvolumen einer weiteren Nutzung zugeführt, so daß dieses Bauvolumen an einer anderen Stelle, nämlich im Bereich des Lenkrades eingespart werden kann. Der Gasgenerator bzw. das Airbag-System wirken im übrigen in an sich bekannter Weise mit einem, einen Aufprall signalisierenden Sensor zusammen.

Die Lenkspindel ist innerhalb eines Lenkungsschutzrohres angeordnet, welches seinerseits an Teilen der Karosserie befestigt ist und u.a. der Aufnahme von Lagerungen für die Lenkspindel dient. Die zur Aufnahme des Gasgenerators bestimmte Lenkspindel ist erfindungsgemäß unter Verwendung energieabsorbierender Bauteile längenveränderbar ausgebildet. Hierbei wird angestrebt, daß im Fall eines Aufpralls zunächst die Lenksäule um ein bestimmtes Maß axial verkürzt wird, bevor diese in die Fahrgastzelle eindringt. Die Verkürzung erfolgt unter Energieabsorption, so daß über eine solche Verkürzung in gleicher Weise wie über eine Verformung der Vorderwagenstruktur ein Teil der Aufprallenergie in geeigneter Weise gebunden ist. Diese Energiebindung kann auf einer definierten plastischen Verformung von Teilen der Lenkspindel beruhen - sie kann jedoch auch in Reibungsenergie und damit lediglich in Wärme umgesetzt werden. Soweit auf konstruktivem Wege eine Energieabsorption realisiert ist, sei es durch Anordnung von unter Überwindung von Reibungskräften zueinander beweglicher Bauteile, sei es durch plastische Verformung von für diesen Zweck vorbereiteten Bauteilen, kann die Ausbildung und Gestaltung von energieabsorbierenden Bauteilen der Lenkspindel beliebig vorgenommen werden. Die erfindungsgemäße Lenkspindel ist somit multifunktional genutzt. Neben ihrer Verwendung als Konstruktionselement zur Übertragung von Steuerbewegungen dient sie zur Aufnahme eines wesentlichen Teils des Airbag-Systems und ist darüber hinaus als ein, in Richtung ihrer Längsachse unter Energieabsorption längenveränderbares Bauelement der passiven Sicherheit ausgebildet.

Der Gasgenerator kann als patronenartiges, in geeigneter Weise innerhalb der Lenkspindel befestigbares, beispielsweise einschraubbares Bauteil ausgestaltet sein. Es kann jedoch die Lenkspindel auch unmittelbar zur Aufnahme der Funktionselemente, insbesondere der Stoffe oder auch des Stoffes herangezogen werden, die/der zur Bereitstellung des für ein Aufblasen des Sackes im Falle eines Aufpralles erforderlichen Gases notwendig sind. Die Lenkspindel kann insoweit unmittelbar als Aufnahmebehältnis für diese Stoffe oder auch mit diesen zusammenwirkenden Einrichtungen benutzt werden.

Gemäß den Merkmalen des Anspruchs 2 ist zusätzlich das Lenkungsschutzrohr in Richtung seiner Längsachse unter Energieabsorption längenveränderbar ausgestaltet.

Gemäß den Merkmalen der Ansprüche 3 bis 5 kann die unter Energieabsorption erfolgende Längenveränderbarkeit dadurch bereitgestellt werden, daß die Lenkungsspindel und/oder das Lenkungsschutzrohr teleskopierbar ausgestaltet sind, mit Soll-Verformungsabschnitten ausgerüstet sind oder daß zumindest die Lenkspindel einen Wellrohrabschnitt aufweist.

Die Halterung des Lenkungsschutzrohres ist entsprechend den Merkmalen des Anspruchs 6 dahingehend ausgebildet, daß eine Positionsverstellung lediglich in einer Richtung senkrecht zur Längsachse der Lenksäule möglich ist. Dies betrifft solche Lenksäulen, deren Lenkungsschutzrohr starr ausgebildet ist. In allen anderen Fällen ist entsprechend den Merkmalen des Anspruchs 6 eine Verstellung in Richtung und senkrecht zur Längsachse der Lenksäule möglich.

Die Erfindung wird im folgenden unter Bezugnahme auf die in den Zeichnungen schematisch wiedergegebenen Ausführungsbeispiele näher erläutert werden. Es zeigen:
Fig. 1. einen Längsschnitt des oberen Teils einer erfindungsgemäßen Lenksäule;
Fig. 2 einen Längsschnitt einer ersten Variante des oberen Teils einer erfindungsgemäßen Lenksäule;
Fig. 3 einen Längsschnitt einer zweiten Variante des oberen Teils einer erfindungsgemäßen Lenksäule;
Fig. 4 einen Querschnitt einer Lenksäule entsprechend einer Ebene IV-IV der Fig. 3;
Fig. 5 einen Längsschnitt einer dritten Variante des oberen Teils einer erfindungsgemäßen Lenksäule;
Fig. 6 einen Querschnitt der Lenksäule entsprechend einer Ebene VI-VI der Fig. 5.

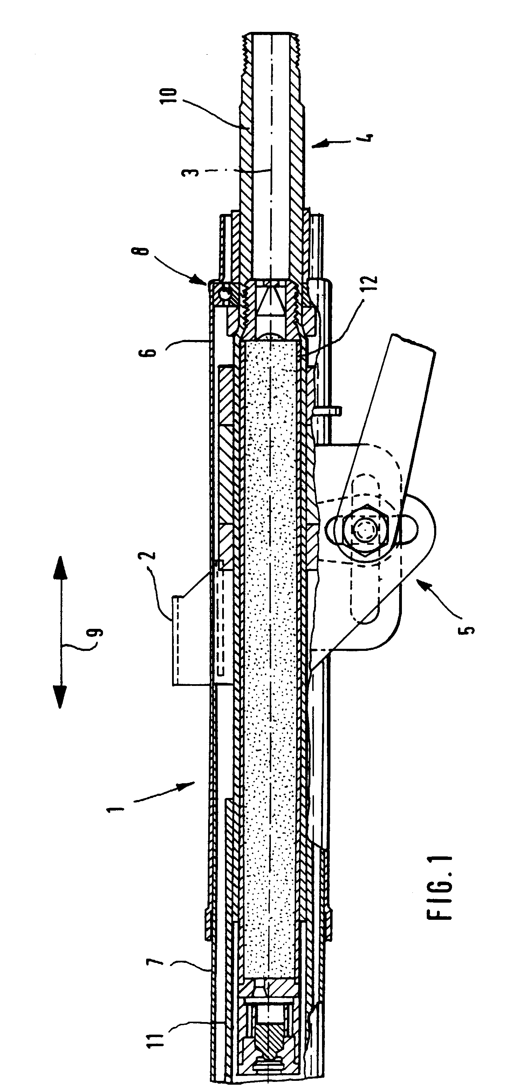

Mit 1 ist in Fig. 1 ein, über eine Halterung 2 am Fahrgestellrahmen oder an Karosserieteilen zu befestigendes Lenkungsschutzrohr bezeichnet, innerhalb welchem in koaxialer Anordnung bezüglich einer Längsachse 3 eine Lenkspindel 4 angeordnet ist.

Die Halterung 2 ist wie an der Stelle 5 angedeutet - in Richtung der Längsachse 3 sowie senkrecht zu dieser verstellbar und ermöglicht dementsprechend variable Befestigungen.

Das Lenkungsschutzrohr 1 besteht im wesentlichen aus zwei, teleskopierbar ineinander angeordneten Rohrabschnitten 6, 7, in denen, wie an der Stelle 8 beispielhaft gezeigt ist, die Lenkspindel 4 über Wälzlagerungen um die Längsachse 3 drehbar gelagert ist. Die Rohrabschnitte 6, 7 sind um ein definiertes Ausmaß in Richtung der Pfeile 9 verschiebbar zueinander ausgebildet und angeordnet.

Die hohl ausgebildete Lenkspindel 4 besteht ebenfalls aus zwei, teleskopartig ineinandergesteckten Rohrabschnitten 10, 11, die in gleicher Weise wie die Rohrabschnitte 6, 7 in Richtung der Pfeile 9 um ein definiertes Maß axial bewegbar sind.

Bei dieser Variante des Erfindungsgegenstands werden die Konstruktionselemente, über welche im Falle eines Aufpralls Energie aufgenommen und umgesetzt wird, durch das System der ineinandergesteckten Rohrabschnitte 6, 7 des Lenkungsschutzrohrs 1 und 10, 11 der Lenkspindel 4 gebildet. Eine Verschiebung dieser Rohrabschnitte 6, 7, 10, 11 ist nur unter Uberwindung von Reibungskräften möglich und wirkt auf diese Weise energieabsorbierend.

Innerhalb der Lenkspindel 4, und zwar in diese eingeschraubt, befindet sich ein patronenartiger Gasgenerator 12, der mit einem zeichnerisch nicht dargestellten Sensor, beispielsweise nach Art eines Beschleunigungsmessers zusammenwirkt. Der Gasgenerator wird in an sich bekannter Weise über den Sensor betätigt und entwickelt - durch den Sensor aktiviert - ein Gas, welches über den Rohrabschnitt 10 der Lenkspindel 4 in Richtung auf den zeichnerisch nicht dargestellten, innerhalb des Lenkrads untergebrachten Sack hin strömt.

Ein Teil einer Airbag-Funktionseinheit, nämlich der Gasgenerator, ist innerhalb der Lenkspindel und nicht innerhalb des Lenkrades untergebracht ist und auf diese Weise räumlich bzw. konstruktiv mit einer Sicherheitslenksäule zusammengefaßt ist. Im Falle eines Aufpralles wird über die Lenksäule eine Verformungsstrecke von beispielsweise 100 mm bis 150 mm durch die teleskopierbare Ausgestaltung aufgefangen, bevor diese in die Fahrgastzelle eindringt und den Fahrer verletzen kann. Das ermöglicht die Behandlung des Airbag-Systems und der Lenksäule als konstruktive Einheit, die hinsichtlich ihrer näheren Ausgestaltung optimiert werden kann.

In den nachstehend beschriebenen Zeichnungsfiguren 2 bis 6 sind Funktionselemente, die mit denjenigen der Fig. 1 übereinstimmen, entsprechend beziffert, so daß auf eine diesbezügliche wiederholte Beschreibung verzichtet werden kann.

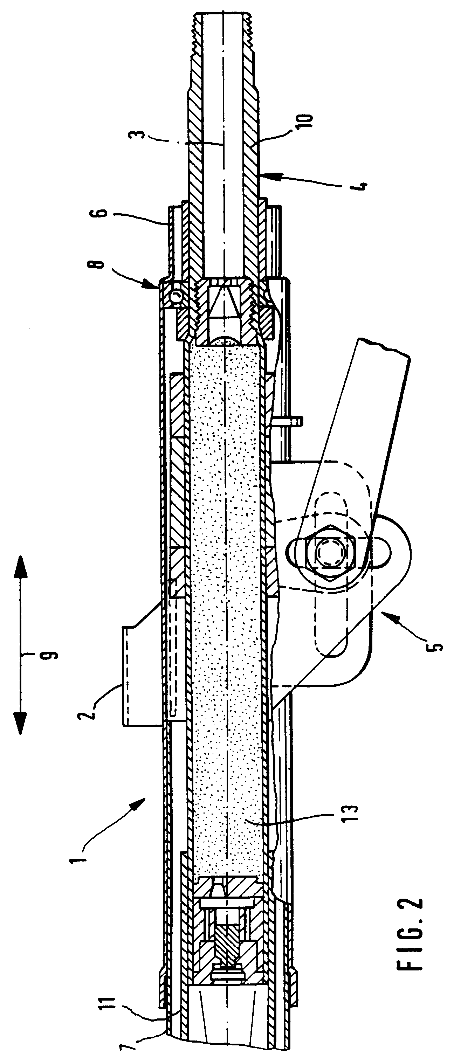

Wesensmerkmal des Ausführungsbeispiels gemäß Fig. 2 ist, daß nunmehr der hintere Teil des Rohrabschnitts 10 der Lenkspindel 4 unmittelbar den Aufnahmeraum 13 für den Gasgenerator bzw. den Stoff/die Stoffe oder auch Einrichtungen bildet, welche im Falle eines Aufpralls das zur Füllung des Sacks erforderliche Gas bereitstellen. Bei dieser Variante entfällt somit ein patronenartiger einschraubbarer Gasgenerator - es wird die Lenkspindel vielmehr multifunktional genutzt, nämlich gleichzeitig zur Drehmomentübertragung und als Aufnahmeraum im obigen Sinne.

Das System von ineinander teleskopierbar angeordneten Rohrabschnitten 6, 7 des Lenkungsschutzrohrs 1 und 10, 11 der Lenkspindel 4 entspricht im übrigen der Variante gemäß Fig. 1.

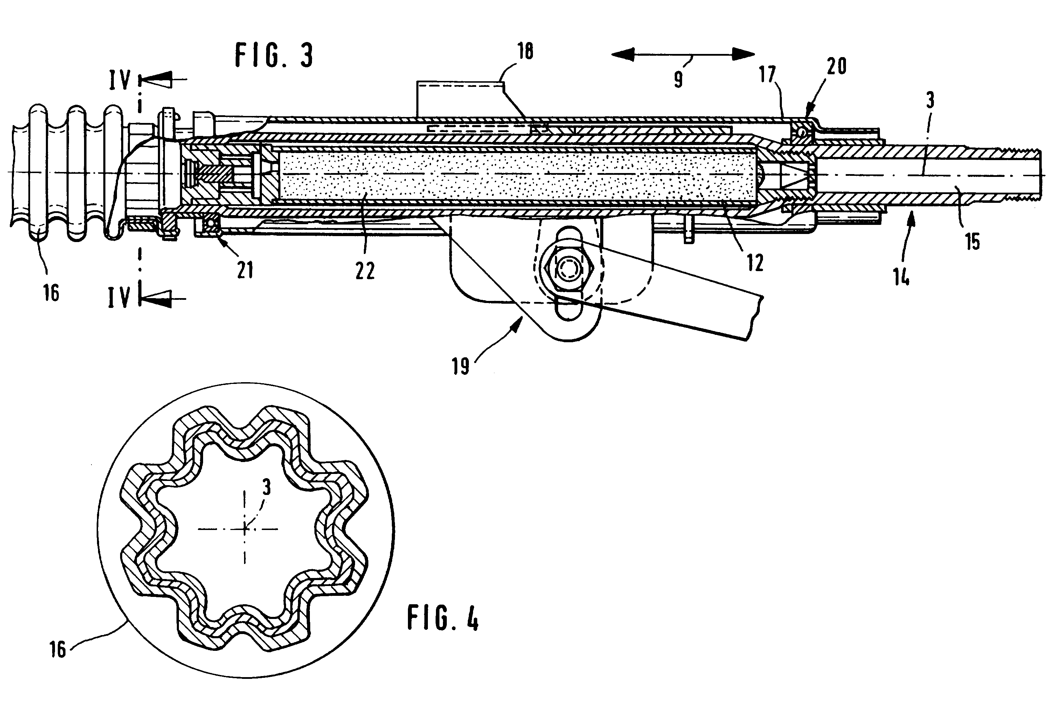

Bei der Variante gemäß den Fig. 3 und 4 wird wiederum ein einschraubbarer Gasgenerator 12 benutzt, der in eine Lenkspindel 14 einschraubbar ist. Die Lenkspindel besteht aus einem Rohrabschnitt 15, der unterseitig in einem Wellrohr 16 fortgeführt ist. Der Rohrabschnitt 15 und der Wellrohrabschnitt 16 bilden gemeinsam die der Drehmomentübertragung dienende Lenkspindel.

Der Rohrabschnitt 15 erstreckt sich innerhalb eines Lenkungsschutzrohrs 17, welches über eine Halterung 18 am Fahrgestell oder an Karosserieteilen befestigt ist. Die Befestigung erfolgt - wie an der Stelle 19 angedeutet - derart, daß eine Justierung senkrecht zur Längsachse 3 möglich ist.

Innerhalb des Lenkungsschutzrohres ist der Rohrabschnitt 15 an den Stellen 20, 21 über Wälzlagerungen drehbar gelagert.

Bei dieser Ausführungsvariante entsprechend den Fig. 3 und 4 bildet der Wellrohrabschnitt 16 den Teil der Lenksäule, der im Fall eines Frontalaufpralls plastisch verformbar ist, und zwar beispielsweise um das oben angegebene Ausmaß in Richtung der Längsachse 3.

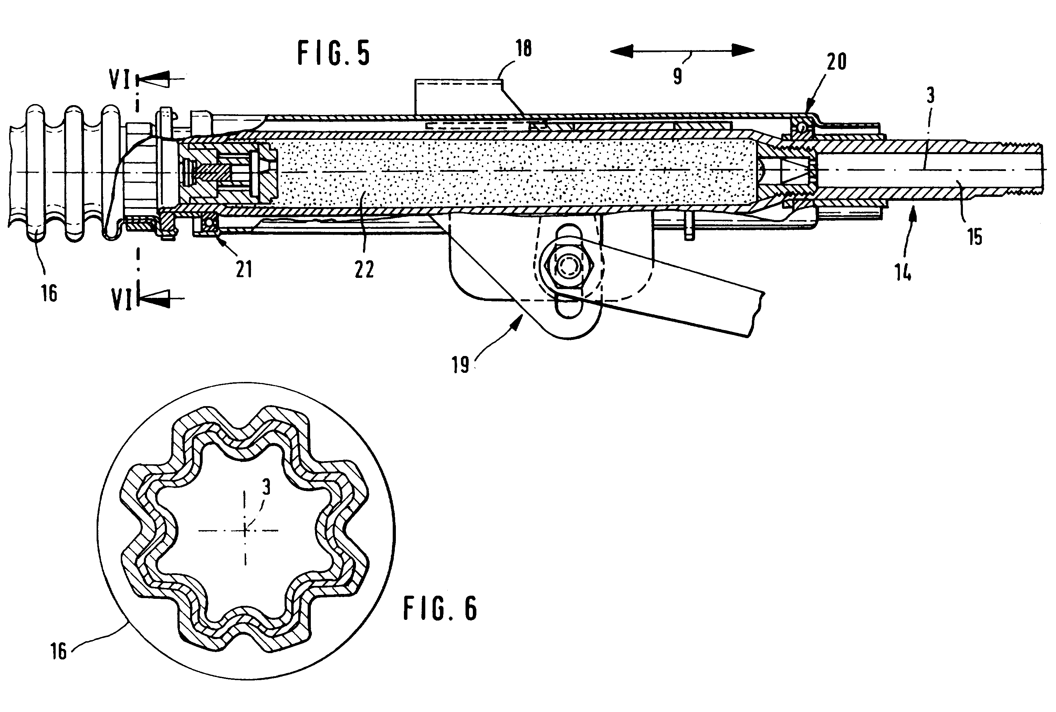

Wesensmerkmal der in den Fig. 5 und 6 gezeigten Variante ist, daß nunmehr die Lenkspindel 14 - ähnlich wie die Lenkspindel 4 gemäß Fig. 2 unmittelbar einen Aufnahmeraum 22 für den Stoff/die Stoffe oder Einrichtungen, die der Bereitstellung des Gases für den Sack dienen, aufweist. Es liegt somit wiederum eine multifunktionale Nutzung der Lenkspindel 14, insbesondere deren Rohrabschnitts 15 vor.

Im übrigen entspricht diese Variante hinsichtlich ihrer mechanischen Wirkungen derjenigen gemäß den Fig. 3 und 4.

Wesensmerkmal der erfindungsgemäßen Lenksäule ist in jedem Fall, daß ein Teil des Airbag-Systems in die Lenksäule integriert ist, so daß der, für die Unterbringung dessen übriger Systemkomponenten erforderliche Raum innerhalb der Struktur beispielsweise eines Lenkrades kleiner ausfällt und das Lenkrad leicht, symmetrisch und insbesondere massearm gebaut werden kann. Dies bringt nicht nur Vorteile bei der designmäßigen Gestaltungsfreiheit mit sich, sondern beseitigt auch Unannehmlichkeiten für den Fahrer, die sich ansonsten aus der Gestaltung eines massereichen und insbesondere unwuchtbehafteten Lenkrades ergeben.

Schließlich ergibt sich auch der Vorteil eines nunmehr einheitlichen, das Lenkrad, das Airbag-System und die Lenksäule zusammenfassenden Sicherheitskonzepts, welches einer konstruktiven Optimierung zugänglich ist.

## Patentansprüche

1. Lenksäule für die Lenkung eines Kraftfahrzeugs, bestehend aus
- einer, zumindest teilweise innerhalb eines Lenkungsschutzrohres (1,17,24) drehbar gelagerten Lenkspindel (4,14,23), einem Lenkrad und einem, durch einen Gasgenerator (12), einen aufblasbaren Sack und ein Polsterteil gebildeten Airbag-System,
- wobei der Gasgenerator (12) innerhalb der Lenkspindel (4,14,23) angeordnet ist,
dadurch gekennzeichnet,
- daß zumindest die Lenkspindel (4,14,23) in Richtung ihrer Längsachse unter Verwendung energieabsorbierender Bauteile längenveränderbar ausgebildet ist.

2. Lenksäule nach Anspruch 1,
dadurch gekennzeichnet,
- daß zusätzlich das Lenkungsschutzrohr (1) in Richtung seiner Längsachse (3) unter Verwendung energieabsorbierender Bauteile längenveränderbar ausgestaltet ist.

3. Lenksäule nach Anspruch 1 oder 2,
dadurch gekennzeichnet,
- daß die Lenkspindel (4) und das Lenkungsschutzrohr (1) teleskopierbar ausgebildet sind.

4. Lenksäule nach einem der Ansprüche 1 bis 3,
dadurch gekennzeichnet,
- daß die Lenkspindel (14) und/oder das Lenkungsschutzrohr (1) mit Soll-Verformungsabschnitten ausgerüstet sind.

5. Lenksäule nach einem der Ansprüche 1, 2 oder 4,
durch gekennzeichnet,
- daß zumindest die Lenkspindel (14) einen Wellrohrabschnitt (16) aufweist.

6. Lenksäule nach einem der vorangegangenen Ansprüche 1, 2, 4 oder 5,
gekennzeichnet durch
- eine Halterung (18), die senkrecht zur Längsachse (3) des Lenkungsschutzrrohres (17,24) Positionsjustierungen ermöglicht.

7. Lenksäule nach einem der vorangegangenen Ansprüche 1 bis 5,
gekennzeichnet durch
- eine Halterung (2), die Positionsjustierungen parallel und senkrecht zur Längsachse (3) des Lenkungschutzrohres (1) ermöglicht.

## Claims

1. Steering column for the steering of a motor vehicle, consisting of
- a steering-wheel shaft (4, 14, 23) mounted rotatably at least partially within a protective steering tube (1, 17, 24), a steering wheel and an airbag system comprising a gas generator (12), an inflatable bag and a padded part,
- wherein the gas generator (12) is arranged within the steering-wheel shaft(4, 14, 23),
characterised in that,
- at least the steering-wheel shaft (4, 14, 23) is arranged to be changeable in length in the direction of its longitudinal axis by the use of energy-absorbing components.

2. Steering column according to claim 1,
characterised in that
- additionally, the protective steering tube (1) is arranged to be changeable in length in the direction of its longitudinal axis (3) by the use of energy-absorbing components.

3. Steering column according to claim 1 or 2,
characterised in that
- the steering-wheel shaft (4) and the protective steering tube (1) can telescope into one another.

4. Steering column according to one of claims 1 to 3,
characterised in that
- the steering-wheel shaft (14) and/or the protective steering tube (1) are equipped with sections which are intended to deform.

5. Steering column according to one of claims 1, 2 or 4,
characterised in that
- at least the steering-wheel shaft (14) comprises a corrugated tube section (16).

6. Steering column according to one of the preceding claims 1, 2, 4 or 5,
characterised by
- a mounting (18) which permits positional adjustments perpendicular to the longitudinal axis (3) of the protective steering tube (17, 24).

7. Steering column according to one of the preceding claims 1 to 5,
characterised by
- a mounting (2) which permits positional adjustments parallel to and perpendicular to the longitudinal axis (3) of the protective steering tube (1).

## Revendications

1. Colonne de direction pour un véhicule à moteur, composée d'une barre de direction (4, 14, 23) supportée au moins partiellement à l'intérieur d'un tube de protection de la direction (1, 17, 24) avec possibilité de rotation, d'un volant de direction et d'un système de coussin gonflable formé par un générateur de gaz (12), un sac gonflable et une partie formant rembourrage, le générateur de gaz (12) étant disposé à l'intérieur de la barre de direction (4, 14, 23), caractérisée en ce que la barre de direction (4, 14, 23), au moins, est conçue de telle sorte que sa longueur puisse se modifier dans le sens de son axe longitudinal grâce à l'utilisation d'éléments absorbant l'énergie.

2. Colonne de direction selon la revendication 1, caractérisée en ce que le tube de protection de la direction (1) est en outre conçu de telle sorte que sa longueur puisse se modifier dans le sens de son axe longitudinal (3) grâce à l'utilisation d'éléments absorbant l'énergie.

3. Colonne de direction selon la revendication 1 ou 2, caractérisée en ce que la barre de direction (4) et le tube de protection de la direction (1) sont télescopiques.

4. Colonne de direction selon l'une ou l'ensemble des revendications 1 à 3, caractérisée en ce que la barre de direction (14) et/ou le tube de protection de la direction (1) sont pourvus de segments destinés à se déformer.

5. Colonne de direction selon l'une quelconque des revendications 1, 2 ou 3, caractérisée en ce que la barre de direction (14), au moins, présente une section de tube ondulé (16).

6. Colonne de direction selon l'une quelconque des revendications 1, 2, 4 ou 5 précédentes, caractérisée en ce qu'elle comporte une fixation (18) qui permet des ajustements de la position perpendiculairement à l'axe longitudinal (3) du tube de protection de la direction (17, 24).

7. Colonne de direction selon l'une ou l'ensemble des revendications 1 à 5 précédentes, caractérisée en ce qu'elle comporte une fixation (2) qui permet des ajustements de la position parallèlement et perpendiculairement à l'axe longitudinal (3) du tube de protection de la direction (1).
